# EUROPEAN PATENT APPLICATION

(11) **EP 2 908 205 A2**
(43) Date of publication of application: **19.08.2015**
(21) Application number: 15155508.3
(22) Date of filing: 18.02.2015
(51) Int. Cl.: G05D 1/02

(54) **Advanced logic for automated cleaning apparatus**

(30) Priority: 18.02.2014 US 201414183111
(71) Applicant: Giant Innovative Limited, Kwun Tong, Hong Kong (CN)
(72) Inventor: Hui, Wing-kin, Kwun Tong, Hong Kong (CN); Hui, Wing-tak, Kwun Tong, Hong Kong (CN)
(74) Representative: Chaillot, Geneviève

(57) **Abstract**

Disclosed herein is a method and apparatus for cleaning a designated area in an automated and efficient manner. In one exemplar embodiment, an automated pool cleaning vehicle includes the capability of being programmed to perform various cleaning movements and/or programmed patterns. The program is stored in the memory of the APV and executed upon command. The program for cleaning includes the ability to do the full area or only a portion of it. The automated cleaning device may be manually program or program using a remote device such as a cell phone. In an exemplary embodiment various basic movements and/or programmed patterns are strung together to form the desired pattern and that pattern is stored in the automated cleaning device.

## Description

### Cross-Reference and Incorporation of Related Applications:

This application is related to Applications 13/531,594 and 12/939,079**,** filed by co-inventor, Wing-kin HUI, for ***Pool Cleaning Vehicle Having Side Vents And Ducts Pool Cleaning Vehicle With Endless Loop Track,*** respectively and filed on ***Nov.17 & 18, 2008,*** also respectively. These applications are specifically incorporated herein and are to be used for all purposes consistent with incorporation by reference.

This application is also related to US Patent 8,225,446 B2***; Pool Cleaning Vehicle Having Side Vents and Ducts*** issued on *July 24, 2012* is specifically incorporated herein and is to be used for all purposes consistent with incorporation by reference.

This application is also related to *Serial Number* 13/717,601***, Automated Pool Cleaning Vehicle With Scrubber Apparatus*** and filed on ***December 17, 2012,*** which is specifically incorporated herein and are to be used for all purposes consistent with incorporation by reference: Attorney Docket No. *JHUI1980.*

This application is also related to *Serial Number* 13/717,621 ***Automated Pool Cleaning Vehicle With Rotating and Stationary Scrubber*** and filed on ***December** 17,* 2012, which is specifically incorporated herein and are to be used for all purposes consistent with incorporation by reference: Attorney Docket No. ***JHUI1981.***

### Field of the Invention:

This invention generally relates generally to the field of automated cleaning devices. More particularly, this invention relates to such automated cleaning devices which are programmable and includes the ability to customize the program for both area dimensional considerations as well as time considerations.

### Background of the Invention:

It is well accepted that robotic cleaning devices have shown their usefulness in everyday life. In general, these devices come with a set routine for cleaning a surface. There is little in the way of allowing a user to customize the cleaning device for a specific area.

Such cleaning devices for the purposes of this invention disclosure extend to submersible automated pool cleaning devices (APVs), which, as has been noted many times in the incorporated disclosures above, are essential to the proper maintenance of a pool... The typical APV includes a housing and drive members. The drive members attach to the housing usually through connection to a chassis. Drive members include wheels, endless loop tracks and combinations of each. Additionally, vehicles have included two and four wheel drive vehicles in various combinations and variations. In the case of a belt or endless loop track, the track wraps around the drive and/or idler wheels or rollers.

Of course, the primary purpose for all PCV's is to clean the pool and pool water. In order to properly maintain clean pool water, the water itself as well as the pool surfaces must be cleaned and kept clean. It is imperative to keep the pool surfaces free from the buildup of dirt and debris. Once dirt and/or debris is allowed to settle in on the pool surface, algae forms. A large enough build-up of such algae can cause the pool pH to become unbalanced and the pool water unstable, in terms of cleanliness.

Sometimes drastic efforts caused by "dirty" water result in the entire contents of the pool being drained and starting again. As can be appreciated this is an expensive and time consuming process. Additionally, without thorough cleaning and maintain, the situation will simply be repeated. There is no guarantee, without proper maintenance methods, that the water will not simply revert to the same "dirty" condition.

Of special concern in this regard, is the fact that embedded particles can be particular concern. As noted by others, these embedded particulates can cause fatal consequences in term of "dirty water" requiring the emptying of the pool for dry cleaning. Clearly, a condition that is primary to avoid.

Clearly, there is a strong industry-wide need to prevent the buildup of particulates in the pool water. There is even a stronger need to prevent the embedding of such particulates in the surface of the pool. Cleaning each and every square millimeter of the pool's surface is simply not a practical solution. Therefore, Applicant has developed a structure for using the automated pool cleaning vehicle to remove even embedded particulates in the surface of the pool. Additionally, the cleaning structure, in accordance with the invention, facilitates the PCV to thoroughly clean the dirt and debris thus dislodged from the pool's surface. This not only serves the short term goal of keeping the water clean and free from dirt and debris, but also is helpful in accomplishing the long term goal of preventing the buildup of such particulates on and in the surface of the pool.

Manually operated vacuum cleaners require home owners to be occupied and push the machine around the house. Remote vacuums save the home owner the labor of pushing the machine around but still require the attention of operation. In response to this problem, there are APVs. One issue in producing an APV is the problem of controlling the robot cleaner to clean a space in a timely fashion while maintaining high coverage. This problem relates to the difficulty of accurately positioning a robot cleaner. Some vacuums available avoid the positioning problem by making multiple passes through a cleaning space in a somewhat random fashion, changing direction whenever collision is detected, and covering the room multiple times before concluding the vacuum has completed its job. Another method is to map out the cleaning space using a variety of expensive sensors and address each mapped area directly. Both of these methods only provide for a full cleaning of the floor space and do not allow for quick touch ups should they be necessary.

Accordingly there is a long felt need to create an automated vacuum capable of reaching specific areas of floor space in a time sensitive manner without the aid of expensive sensors. Further there is an additional need for an automated vacuum which can cover a reasonable amount of the floor space very quickly to "touch up" a habitable space. In accordance with these and other needs that will become apparent and which are otherwise known, the disclosure herein solves these issues.

### SUMMARY OF THE INVENTION

One exemplary embodiment of the method in accordance with the invention directs the APV in accordance with this invention to execute an abbreviated cleaning cycle based upon a set of selected programmable movements stored in the APV. The movements are combined to define a customized cleaning pattern for the designated area. Each of these stored movements covers only a small portion of the designated area to be cleaned. Once the movements are selected they are stored and then combined into a pattern. The pattern in an exemplary embodiment covers a small portion of the entire cleanable area, such as the area of the pool around the steps or water feature. Consequently, in this exemplary case, the time involved for cleaning the specific area pool is considerably shortened than doing the entire surface of the pool.

It is an object of the present invention to provide a method of cleaning a specific area in an effective way without requiring the aid of expensive sensors.

It is further an object of the invention to provide a device and cleaning apparatus for performing "touch-up" cleaning using programmable instructions.

In an exemplary embodiment of the method of the present invention includes the steps of
selecting an area to be cleaned;
defining a desired pattern suitable for cleaning the selected area, by selecting among a series movements and/or programmed patterns of movements, capable of being performed by the cleaning device, to define the desired pattern;
combining and storing each of the selected movements and/or programmed patterns on the automated cleaning device; and
initiating cleaning by activating the program on the cleaning device where the desired pattern is stored.

The above-mentioned programmed patterns can be pre-programmed patterns and/or user defined patterns, as it will explain hereinafter.

In another exemplary embodiment, the cleaning device comprises an APV having an on-board GPS. The GPS records and stores the movements of the APV as it completes the specific pattern. Upon completion of the pattern, the pattern can be repeated as often as necessary or desired.

In another exemplary embodiment, the cleaning device comprises
an APV, including
the APV being self-propelled and having an on-board memory and including the ability to be programmable;
the memory including a set of predetermined cleaning movements and/or programmed patterns,, the cleaning movements and/or programmed patterns being combinable with one another to define a cleaning program;
a remote device connected to the memory of the APV and capable of instructing the APV to execute the movements and/or programmed patterns in memory;
the remote device also capable of instructing the APV to combine the stored movements and/or programmed patterns; and the remote device capable of instructing the APV to execute the pattern(s) stored in the memory of the APV. This(these) pattern(s) can be programmed pattern(s) or pattern(s) formed by the combination of movement(s) only, of programmed pattern(s) only or of movement(s) and programmed pattern(s).

In another exemplary embodiment of the invention, the method includes the step of mapping the surface to be cleaned with the cleaning apparatus. Using no collision sensor, the method uses a common on-board GPS and wherein the method includes the steps of: choosing a home point in the designated space to be cleaned; selecting one or more movements and/or programmed patterns by a user from a list of predetermined movements and/or programmed patterns for the APV; executing the one or more movements and/or programmed patterns; storing an internal map of the surface area covered by the one or more movements and/or programmed patterns by the APV to at least partially define the shape of the navigable surface to be cleaned.

It is an advantage of the present invention to provide a method of cleaning a designated area using a customized pattern which is stored on the cleaning apparatus and thereby repeatable.

It is a further advantage of the present invention to provide an APV that cleans either a portion of the pool surface area or the entire area as desired in a programmable and repeatable manner.

### Brief Description of the Drawing:

For a further understanding of the objects and advantages of the present invention, reference should be had to the following detailed description, taken in conjunction with the accompanying drawing, in which like parts are given like reference numerals and wherein:
Fig. 1 is an example of the icons used for different exemplary patterns in accordance with the invention , which are programmable into the APV;
Fig. 2 is an exemplary pattern for L-shaped patterns;
Fig. 3 is an exemplary pattern for reverse L-shaped patterns;
Fig. 4 is an exemplary pattern zig-zag pattern;
Fig. 5 is an exemplary pattern for a spiral pattern;
Fig. 6 is an exemplary alternate spiral pattern;
Fig. 7 is an exemplary pattern represented as a figure-eight;
Fig. 8 is an illustration of an exemplary area cleaned by the APV; and
Fig. 9 is an exemplary pattern for the APV in accordance with this invention, for cleaning the exemplary area of Fig. 8.

### Detailed Description of the Invention

The invention will now be described in detail. In an exemplary embodiment, the described invention is a method of instructing a cleaning apparatus, namely an APV to clean a designated space using a customized series of movements, defining a cleaning pattern.

For the purposes of this disclosure a "full cleaning pattern" is defined as the pattern required by the cleaning apparatus to clean at least a substantial majority of a given designated area whether it be a room and a robotic vacuum or a pool with an APV. The scope of the invention is not limited to a particular floor or floor covering.

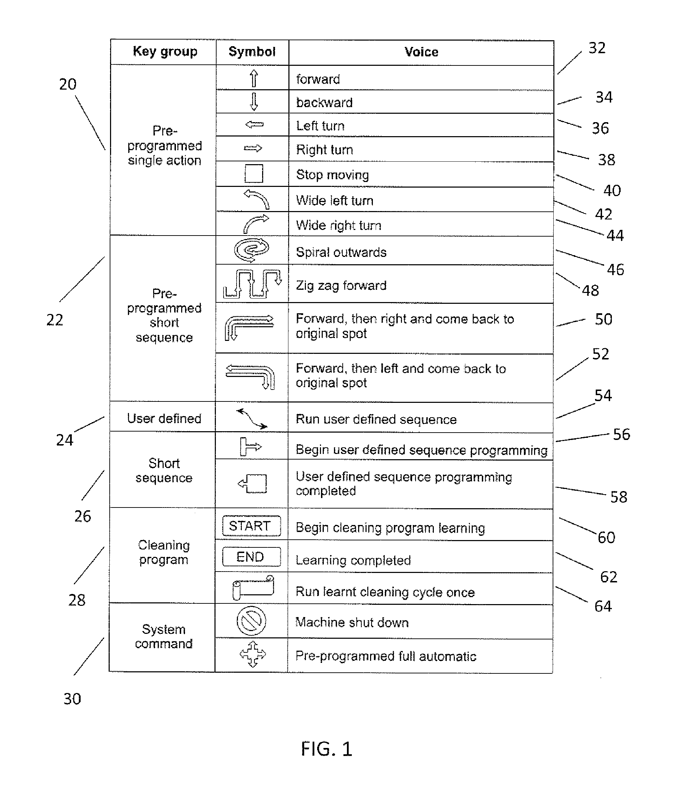

With respect to Fig. 1 there is shown an exemplary embodiment of a chart for programming an automated cleaning device, in an exemplary embodiment an automated pool cleaning vehicle (APV) in accordance with this invention. The chart illustrates various icons representing patterns for APV movement. The invented method contains multiple ways of directing the cleaning pattern by combining these patterns. Each icon defines a movement 20, factory installed patterns 22, user defined patterns 24, and the ability to define customized user patterns 26 using a series of movements 20 represented by the icons.

Additionally, the invention includes the ability to create a customized full cleaning pattern by linking together a series of patterns (22, 24) (or movements 20) and then running that pattern 28.

Additionally, the APV in accordance with the invention includes the ability to incorporate a previously known cleaning cycle 30. And, in an exemplary embodiment includes the ability to create a free form cleaning pattern using the APV's memory and GPS.

The control scheme for the APV is activated and/or programmed by several different methods. These include but are not limited to remote control, voice command, internet application control, and phone remote control. As a sample of a web based internet application, a user maps out a navigable space on a graphic user interface (GUI) using dimensions as they actually pertain to the real space and drag and drop patterns 22, 24 onto the representation of the space such that the space is filled. Pattern sizes are scaled as defined by the constraints in the GUI.

The movements 20 include several basic and well-known remote control instructions. These movements include, but are not limited to the following icon commands, forward 32, back 34, left 36, right 38, stop 40, and wide turns both left 42 and right 44. These movements are programmed by holding down the appropriate icon on the controller in the case of a movement 20. Once the icon button is depressed, the instruction in stored in the APV. Accordingly, the APV executes the appropriate movement upon an initializing command or instruction.

Additionally, the method of the invention includes the ability to program scaled movements into the APV through a remote controller for subsequent execution. One exemplary embodiment of the method of the invention includes multiple depressions of the icons. For example, a single depression of forward icon 32 moves the APV forward six inches. Using the scaled function of the controller, a second press of the forward icon command 32 directs the APV to move forward twelve inches. Three such commands or depressions of the icon key move the cleaning device forward eighteen inches. The process is repeated until the APV is programmed as desired.

The movements 20 create an overall pattern covering the designated surface area to be cleaned. For example, a spiral pattern 46, a zig-zag pattern 48, and an L-shaped turning both right 50 and left 52 are linked to create a pattern for cleaning a specific designated area and indeed an area less than the total surface of the object or room needing cleaning. However, when combined with the other movements 20, the user can define a pattern to clean a specific area or even the entire area to be cleaned.

Each specific function is designed to address the particular cleaning needs of the designed specific area. In one exemplary embodiment, when pre-programmed patterns 22 function as touch-up cleaning cycles, doing only a portion of the total area that could be cleaned and designating that portion as the area designated for cleaning. Each such partial cycle takes only a brief time compared with the full cycle. Thereby, the method in accordance with this invention provides an expedient and efficient method for cleaning the designated area, especially when it is unnecessary to clean the entire area.

As is often the case, the pre-programmed patterns 22 suffice for most purposes. However, as also often occurs, the unique areas of the designated space to be cleaned cannot be addressed by such pre-programmed patterns. In other words, the designated cleaning space is addressed in more efficiently by the customized pattern 54. Each of these patterns has defined dimensions. Each such dimension of the pattern is expandable as a scalable function as described above. The scalable function is used to appropriately fit the APV into the designated area in the most efficient manner possible.

The method in accordance with the invention includes the ability to create a customized pattern 26. The method includes an initiate command 56 and an end command 58. Between these two commands 56, 58 the APV is programmed using the basic movement controls 20. In order to define a customized pattern 26 the various basic functions are linked together in an advantageous manner. A custom pattern is instrumental in dealing with irregular shaped object in the area to be cleaned. In a pool, steps or water features or the like irregularly shaped objects increase the difficulty of cleaning the surface, as will be appreciated by those skilled in the art. When the cleaning device is a robotic vacuum cleaner, the cleaner is programmed to avoid irregular terrain, e.g. furniture, power plugs, plants and the like.

In order to create a cleaning cycle 28 where the entire area possible is cleaned, a number of patterns are combined or strung together forging the desired pattern for the greatest and most efficient cleaning effect. The thus created cleaning program includes an initiate command 60, and end command 62 and a repeat command 64. By combining multiple patterns, and individual steps found on icons 24, 26, the designated area is precisely addressed, whether it is a portion of the area possible to be cleaned or the entire area. Additionally, other steps (movements and/or patterns) in various exemplary embodiments are incorporated into the program and bridge the gaps between the movements or patterns to define a complete pattern. Once all the desired movements and/or patterns have been combined into a complete pattern, the program is saved. After being saved the defined program is run with a single command 64.

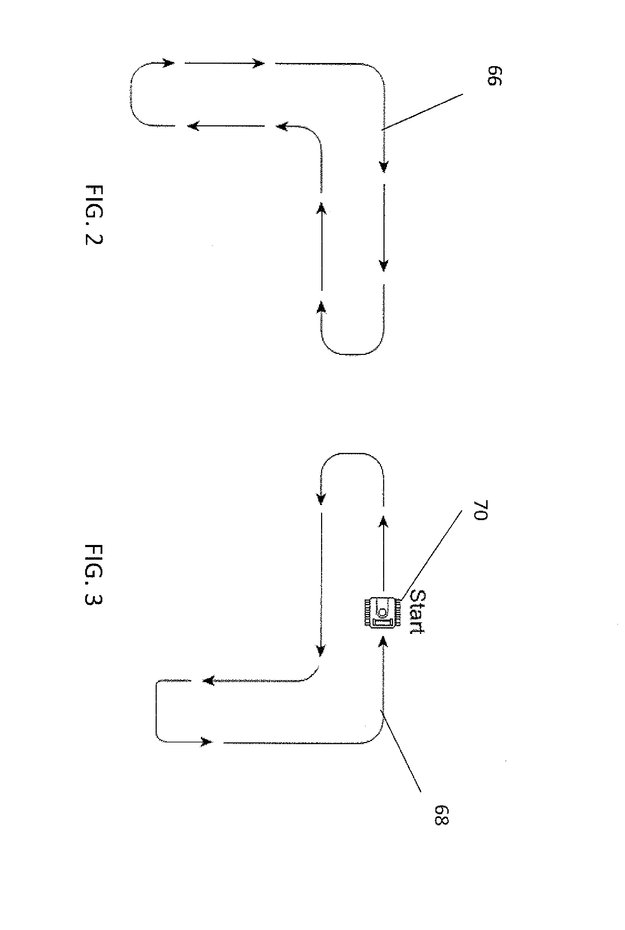

Referring particularly to Figs. 2 through 5, illustrated are various programmable patterns. Specifically, Fig. 2 illustrates an L-shaped pattern 66 where the APV starts and ends at the same point somewhere on the loop. Figure 3 shows a reverse L-shape pattern 68 wherein the APV 70 starts and ends the pattern in the middle of the reverse L-shape 68.

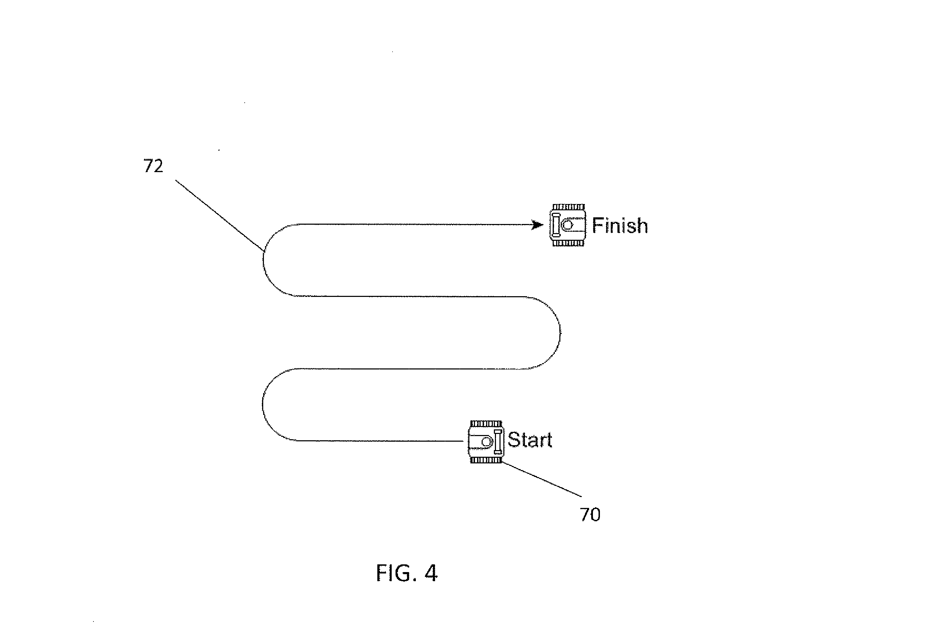

Figure 4 illustrates a zig-zag pattern 72. The beginning and end of the pattern 72 are at different locations. Thereby, upon completing the pattern cycle, the APV 70 is in a different location in the pool then where it began.

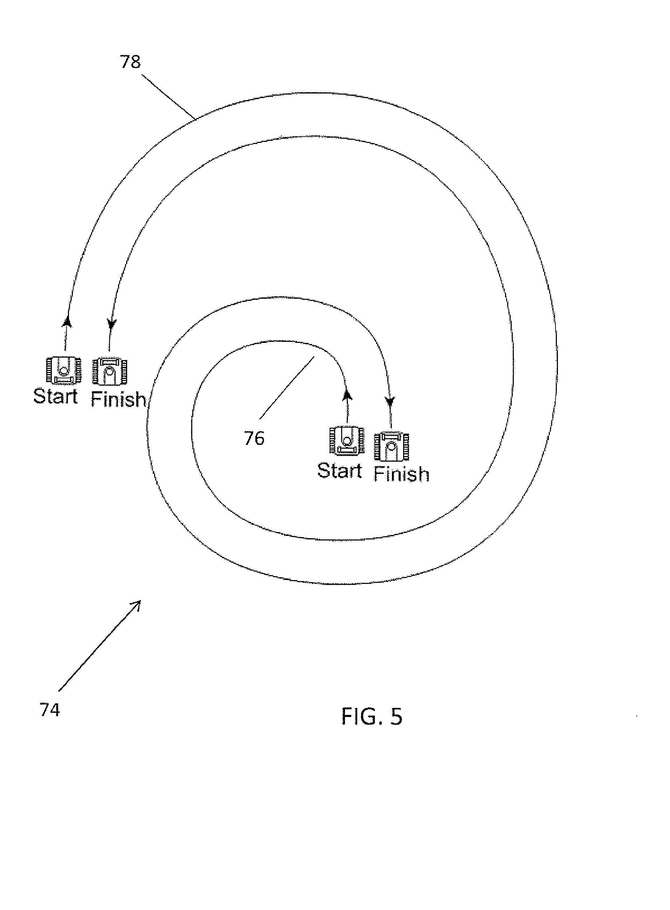

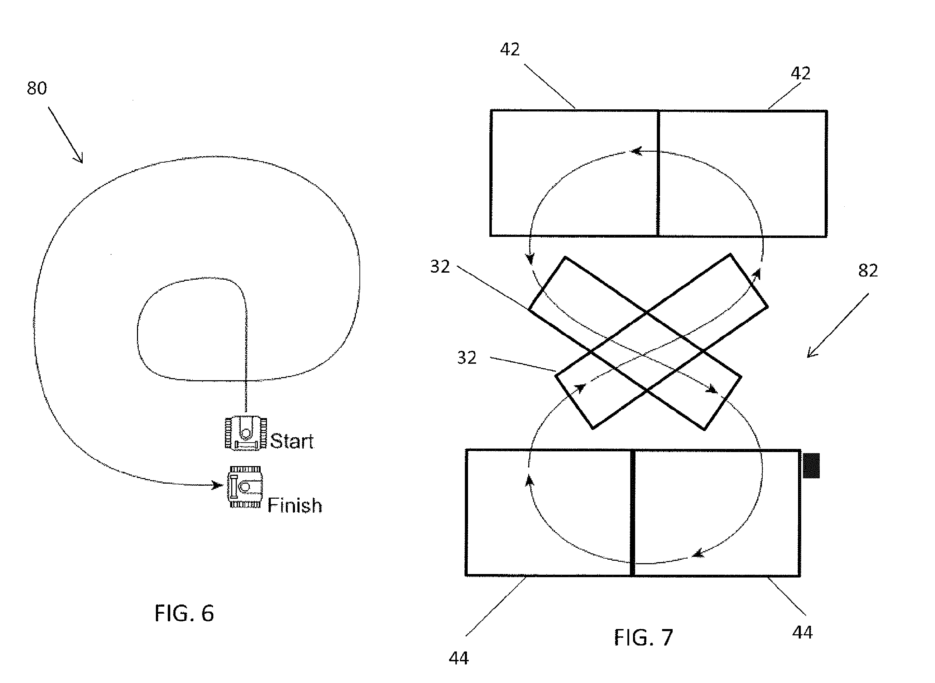

Figure 5 illustrates a spiral pattern 74. The spiral pattern 74 runs either spiraling inward 76 or outwards 78 or both alternatively. The APV runs the spiral pattern 74 as shown in Fig. 5. Also as shown, the APV upon completion of the pattern 74 includes different starting and ending points. In an exemplary embodiment, APV 70 executes the spiral pattern 80 shown in Fig. 6. In this embodiment, the APV begins and ends at approximately the same location.

With particular reference to Figure 7, there is illustrated a user defined pattern in the shape of a figure-eight, generally denoted by the numeral 82. The method of creating this pattern includes beginning with the start command 56. The method includes instructing the APV to perform two wide left turns 42, then a forward command 32 and then two wide right turns 44 and then a second forward command 32 and finally end with the completed command, the end command 58.

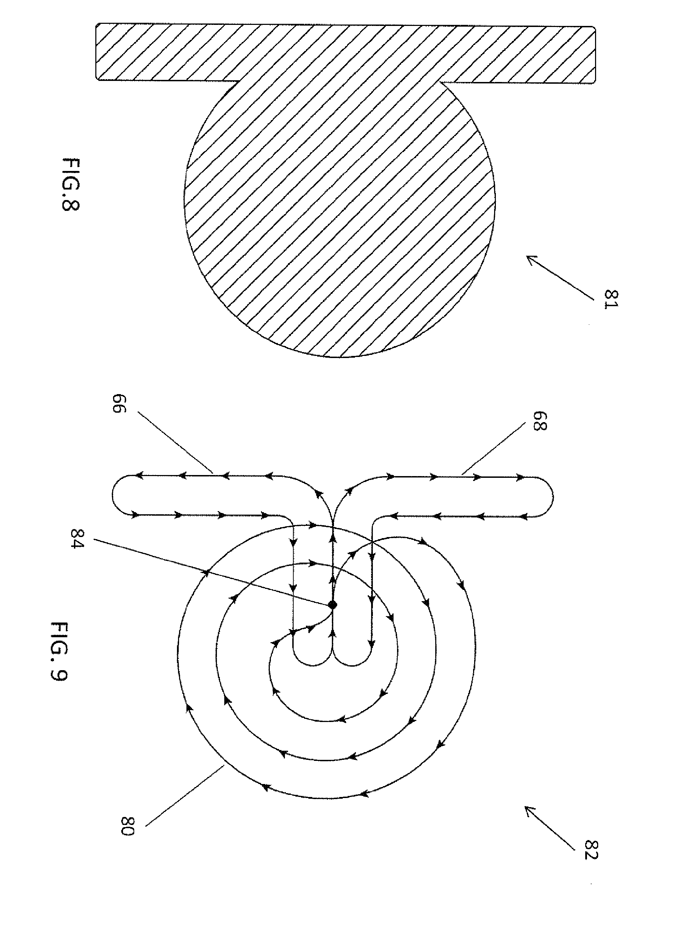

With particular reference to Figs. 8 and 9, there is illustrated an area cleaned by the APV and the pattern which the APV used to clean the area, namely space 81. Specifically, Fig. 9 illustrates an exemplary embodiment of a programmed cleaning, namely, a pattern 82 which is specially designed to clean the space 81. The cleaning pattern 82 includes an L-shape pattern 66, a reverse L-shape pattern 68 and an alternate inward spiral pattern 80. The combination of these three patterns creates a cleaning pattern 82. As shown in Figs. 8 & 9, cleaning pattern 82 addresses the entire space 81. In fact, pattern 82 cleans the space in a remarkably efficient manner with minimal crossover or redundancy, one of the advantages of a pattern programmable to a predefined area. The pattern 82 is relatively common and for example those having a lap pool attached to a free area find this type of pattern especially useful. The pattern 82 includes a starting point 84. The APV is returned to its starting point upon completion of the pattern 82. Thereby, any subsequent uses of the APV also begin at the starting point 84, which is also the terminus point.

As long as a user consistently used the same starting point 84, no additional programming would be required. However, should the APV move upon completion of the pattern, the starting point 84 would need to be re-initialized to accommodate for such changes. Upon initially finding the starting point 84, it is recorded in the APV onboard GPS. In an exemplary embodiment, the APV checks the starting point 84 before starting the pattern run by the APV. If the same, the APV is moved to the correct starting point location and the cycle is started.

In an alternative exemplary embodiment, the APV is used to map out the surface area to be cleaned. Using the controller the APV is guided over the entire surface in exactly the pattern desired. The onboard GPS is turned on prior to starting the mapping cycle. Each step of the pattern is recorded based on the APV's GPS. The pattern is then stored in the APV and named. Whenever desired, the thus named pattern is repeated and cleaning accomplished according to that pattern. Thus, in this exemplary embodiment of the method in accordance with the invention, the specific icon patterns are not combined.

While the foregoing detailed description has described several embodiments of the method of the cleaning structure in accordance with this invention, it is to be understood that the above description is illustrative only and not limiting of the disclosed invention. Particularly, there are varieties of different combinations of patterns or alternative methods which have been described above and those that are not disclosed specifically herein, but fall clearly within the spirit and scope of the invention herein. Each such combination, although not specifically recited and described above is within the spirit and scope of this invention. Thus, the invention is to be limited only by the claims as set forth below.

## Claims

1. A method of cleaning designated area using an automated cleaning device, the cleaning device including the capability of being programmed to perform various movements, the cleaning device including the ability to store such movements, each such movement being capable of being combined to define a pattern, the method of cleaning a designated area using the automated cleaning device being **characterized by** the fact that it comprises the steps of:
selecting a designated area to be cleaned;
defining a desired pattern suitable for cleaning the selected area, by selecting among a series movements and/or programmed patterns of movements, capable of being performed by the cleaning device, to define the desired pattern;
combining and storing each of the selected movements and/or selected programmed patterns on the automated cleaning device; and
initiating cleaning by activating the program on the cleaning device where the desired pattern is stored.

2. The method of Claim 1, wherein the automated cleaning device is programmable using a remote device.

3. The method of Claim 1, wherein each of the selected movements and/or selected programmed patterns are scalable.

4. The method of Claim 3, wherein the scalable movements and/or programmed patterns are increased by the corresponding number of times the movement and/or programmed pattern is selected.

5. The method of Claim 4, wherein the scalable movements and/or programmed patterns are increased by the corresponding number of times the movement and/or pattern is selected, such that if the first selection equaled X, a second selection equals 2X, a third selection equals 3X and so forth.

6. The method of Claim 5, wherein X equals six inches.

7. The method of Claim 1 wherein selecting among a series movements and/or programmed patterns of movements to define the desired pattern includes selecting among a spiral pattern, a zig-zag pattern, and an L-shaped pattern.

8. The method of claim 1 wherein the automated cleaning device includes an on-board GPS and wherein the movements are recorded based upon the positioning according to the GPS.

9. The method of Claim 8, wherein the movements and/or programmed patterns selected in the step of selecting among a series movements and/or programmed patterns of movements to define the desired pattern are stored in the automated cleaning device and named as a custom program and wherein the initiating step includes replaying the thusly stored program and allowing the automated cleaning device to repeat the cleaning operation of the custom program according to the GPS.

10. The method of Claim 9, wherein the step of selecting among a series movements and/or programmed patterns of movements to define the desired pattern includes selecting the movements and/or programmed patterns using voice commands.

11. The method of Claim 1 wherein it comprises, after the initiating step, the step of interrupting automated cleaning device.

12. The method of Claim 11 wherein it comprises, after the interrupting step, the step of manually operating the automated cleaning device.

13. A method of cleaning designated area using an automated cleaning device having an onboard GPS, the cleaning device including the capability of being programmed to perform various movements, the cleaning device including the ability to store such movements, the method of cleaning a designated area using the automated cleaning device being **characterized by** the fact that it comprises the steps of:
selecting an area to be cleaned;
defining a pattern suitable for cleaning the selected area by operating the cleaning device over the area;
storing the pattern the cleaning device created while operating it over the area;
repeating the pattern recording upon an initializing command for cleaning the area selected; and
cleaning the area by activating the initializing command so stored.

14. An automated cleaning apparatus, **characterized by** the fact that it comprises;
an automated pool cleaning vehicle APV;
the APV being self-propelled and having an on-board memory and including the ability to be programmable;
the memory including a set of predetermined cleaning movements and/or programmed patterns, the cleaning movements and/or programmed patterns being combinable with one another to define a cleaning program;
a remote device connected to the memory of the APV and capable of instructing the APV to execute the movements and/or programmed patterns in memory;
the remote device also capable of instructing the APV to combine the movements and/or programmed patterns; and
the remote device capable of instructing the APV to execute the pattern(s) stored in the memory of the APV.

15. The apparatus of Claim 14 wherein the remote device includes a wireless device, preferably a cell phone.

16. The apparatus of Claim 15 wherein the predetermined cleaning movements and/or programmed patterns are scalable.

17. The apparatus of Claim 14 wherein the APV includes a GPS.

18. The apparatus of Claim 14 wherein the APV is capable of being instructed to move manually according to the stored movements and/or programmed patterns using the remote device.
